# EUROPEAN PATENT APPLICATION

(11) **EP 0 722 815 A1**
(43) Date of publication of application: **24.07.1996**
(21) Application number: 94923083.3
(22) Date of filing: 05.08.1994
(51) Int. Cl.: B29B 17/00, C08J 11/10

(54) **METHOD OF DECOMPOSING WASTE PLASTICS AND APPARATUS THEREFOR**

(71) Applicant: NIPPO LTD., Osaka 564 (JP); Kuroki, Takeshi, Saitama 359 (JP)
(72) Inventor: KUROKI, Takeshi, Saitama 359 (JP)
(74) Representative: Gold, Tibor Z.
(86) International application number: JP9401302
(87) International publication number: WO9604116

(57) **Abstract**

The present invention has as an object to provide a method and apparatus for decomposing waste plastics, whereby a method of supplying reaction energy for decomposition reaction of the waste plastics has been fundamentally solved with a reaction mechanism taken into consideration, to realize high-efficiency decomposition of the waste plastics at relatively low temperatures and efficient recovery of decomposed products of high utility value. Into a reactor (20), a heat-reserving heating medium employing, for example, a granular silica-alumina material is charged after preheated outside of the reactor and at the same time a crushed waste plastics is supplied. A mixture of these materials forms fluidized beds (86a to 86e, 88a to 88e). While these fluidized beds are being moved in a specific direction within the reactor, heat energy for decomposition is supplied from the heat-reserving heating medium to decompose the waste plastics. At the same time, a volatile matter produced by this decomposition is passed through in the fluidized beds, being led to the outside at a volatile matter discharging port and recovered, while a nonvolatile matter is taken out together with the heat-reserving heating medium at the medium discharging port, being separated and recovered from the heat-reserving heating medium.

## Description

### [FIELD OF THE INVENTION]

The present invention relates to the reuse or effective utilization of waste plastics as resources and, more particularly, to decomposing technology for recovering, from the waste plastics, mainly fuel gas, fuel oil, etc. as paraffinic components having an added value.

### [BACKGROUND OF THE INVENTION]

Generally, domestic and factory wastes collected include many kinds of plastics. These waste plastics become reusable as gas or fuel oil through thermal decomposition from a high polymer to a low polymer. However, because of various disadvantages inherent in conventional methods of waste plastics decomposition, no apparatus has been placed in practical operation yet with the exception of a special case notwithstanding there has been a keen, urgent demand therefor.

There have been built and tested many experimental apparatus for decomposing waste plastics, which may be roughly divided into an external heating system and an internal heating system.

The external heating system known as a pipe steel system or a retort system is for decomposing waste plastics in a reactor by heating the reactor from outside by the use of a burner or the like. There are many like examples designed primarily for the use of a relatively small-type reactor for sorted plastics.

On the other hand, the internal heating system known as a fluidized bed or a shaft furnace is for decomposing waste plastics in a reactor with heating gas as decomposition energy introduced into the reactor. A relatively large reactor has been tested; especially tests and researches have been carried out on a number of fluidized-bed type apparatus.

These conventional apparatus are not operable as the above-described practical apparatus mainly for the following reasons. First, in the case of the external heating system, the thermal conductivity of plastics is low and therefore there occurs a temperature difference between the outer peripheral section and the central section within the reactor, presenting the following problems.
(1) The temperature difference resulting from low thermal conductivity provides different reaction occurring between the outer peripheral section and the central section. That is, in the outer peripheral section in the reactor, there takes place a severe decomposition reaction whereby carbon is formed; and reversely in the central section, there takes place a moderate decomposition reaction as is seen in wax formation.
(2) A carbon film is likely to be formed by coaxing on the inside wall of the reactor. This carbon film hinders heat transfer to the reactor interior, resulting in a substantially decreased heating efficiency, inefficient supply of reaction energy, and consequently uneconomical waste of much energy.
(3) A decomposition product has a comparatively wide molecular weight distribution, and the product is chiefly olefinic and is liable to polymerization and component modification during storage or transport. Therefore, substance recovered is of low profitability.
(4) If waste plastics includes a polymer such as PVC (polyvinyl chloride) or PET (polyethylene terephthalate), which are hard to be oiled, much of solid residue remains inside the reactor and is not easily removable. It, therefore, becomes necessary to segregate polymeric plastics only to polyolefin plastics which is advantageous for oiling or to adopt a pyrolytic reactor (600°C and over) despite of its economical disadvantage.

In the case of the internal heating system, the heating gas supplied as decomposition energy flows at a relatively high velocity, resulting in a very short residence time. Therefore, the reaction temperature must be increased to 600 °C or higher and has the following problems.
(1) Generally, the decomposition product is in a form of gas, which, containing much of (CO₂ and CO, is of a low combustion calorie as fuel gas and therefore recovered substance is of low marketability.
(2) The reaction apparatus used for pyrolytic reaction is expensive and at the same time the life of the reactor becomes short, resulting in relatively expensive recovery of low profitability.

There has been hardly known a practical waste plastics decomposing apparatus using the conventional external heating system and internal heating system because such fundamental problems as the relatively high velocity of heating gas supplied as decomposition energy and the low marketability of product still remain unsolved. Treatment of waste plastics, therefore, is now still dependent on combustion and burying under the ground notwithstanding a keen demand for the aforesaid decomposing treatment capable of recovering useful components.

In view of the above-described problems inherent in the heretofore known method of waste plastics decomposition, it is an object of the present invention to provide a method and apparatus for decomposing waste plastics, which are capable of basically solving the problems pertaining to the method for supplying reaction energy for the decomposition of the waste plastics, to thereby enable highly efficient decomposition of the waste plastics at relatively low temperatures, and moreover efficiently obtaining a decomposition product of high utility value.

### [DISCLOSURE OF THE INVENTION]

The method of the present invention for decomposing waste plastics uses a fluidized-bed type reactor having a waste plastics charging port, a medium charging port, a volatile matter discharging port, and a medium discharging port. The fluidized bed is formed of a mixture of waste plastics charged at the waste plastics charging port and a granular heat-reserving heating medium preheated and charged at the medium charging port. With this fluidized bed being moved in a specific direction within the reactor, the heat energy for decomposition is supplied from the heat-reserving heating medium to decompose the waste plastics. A volatile matter thereby generated is passed in the fluidized bed, being led out of the reactor at the volatile matter discharging port and recovered. A nonvolatile matter, after being taken out together with the heat-reserving heating medium at the medium discharging port, is separated for recovery from the heat-reserving heating medium.

According to the decomposing method, the waste plastics is supplied with the heat energy for decomposition from the heat-reserving heating medium while being in contact in a mixed state with the heat-reserving heating medium which is preferably 2 to 3 mm in mean grain size; it is, therefore, possible to obtain such a state of parallel decomposition by the use of a number of small systems of reaction, thereby enabling uniform heating throughout with little temperature difference. As a result, uniform decomposition can be performed at a desired temperature throughout the fluidized bed. That is, it is possible to carry out the control of decomposition reaction in a reasonable manner. Therefore, the control of properties of recovered products can easily be performed, thus efficiently obtaining decomposition products of high utility value.

According to the decomposing method it is possible to easily and efficiently separate a volatile matter or volatile components from a nonvolatile matter (including wax components, grease components, and further carbide), thereby improving the quality of light oil recovered from the volatile components.

That is, the conventional method cannot prevent the inclusion of fine-grain nonvolatile matter in the volatile components at the time of recovery, and requires a special apparatus to separate the nonvolatile matter from the volatile components. According to the decomposing method of the present invention, the nonvolatile matter is efficiently separated by the filtering function of the heat-reserving heating medium of the fluidized bed, and accordingly, at the volatile matter discharging port, volatile components containing almost no nonvolatile matter can be recovered.

According to the decomposing method of the present invention, the nonvolatile matter holding on the heat-reserving heating medium is usable as a source of energy at the time of regeneration and heating of the heating medium, and therefore it is possible to enhance the energy efficiency throughout the decomposition system and to reduce a load on the environment.

As regards the method for decomposing waste plastics as described above, it is possible to use the heat-reserving heating medium having catalytic power as the heating medium for the decomposition of waste plastics. The use of the heat-reserving heating medium having the catalytic power allows decomposition at lower temperatures and at higher speeds of decomposition, thereby raising the decomposition efficiency on the whole. The use of the heat-reserving heating medium having the catalytic power can also preponderantly promote the hydrogenation of olefin components, thus recovering a paraffinic oil content having high stability and high utility value. A representative example of a heat-reserving heating medium having such catalytic power is a silica-alumina granular material.

Furthermore, according to the above-described method for decomposing waste plastics, a more preferable result is obtained by supplementarily supplying the heat energy to the fluidized bed, thereby controlling temperature distribution at the fluidized bed. That is, because of much heat energy consumption at the time of decomposition, there occurs temperature distribution in the fluidized bed according to the degree of progress of decomposition. Reasonable control of decomposition and stabilized properties of products are ensured by supplying the heat energy partly to the fluidized bed correspondingly to this temperature distribution.

Such auxiliary heat energy can be supplied by supplying, for example, a high-temperature gas to a reactor from outside or from a heat source built in the reactor.

### [BRIEF DESCRIPTION OF THE DRAWINGS]

Fig. 1 is a schematic block diagram showing an apparatus for decomposing waste plastics in a first embodiment according to the present invention;
Fig. 2 is a schematic block diagram showing an apparatus for decomposing waste plastics in a second embodiment according to the present invention;
Fig. 3 is a schematic block diagram showing an apparatus for decomposing waste plastics in a third embodiment according to the present invention;
Fig. 4 is a sectional view of a built-in heat source of an apparatus for decomposing waste plastics in a fourth embodiment according to the present invention; and
Fig. 5 is a perspective view of the built-in heat source shown in Fig. 4.

### [MODES FOR CARRYING OUT THE INVENTION]

Hereafter the preferred embodiments of the present invention will be explained.

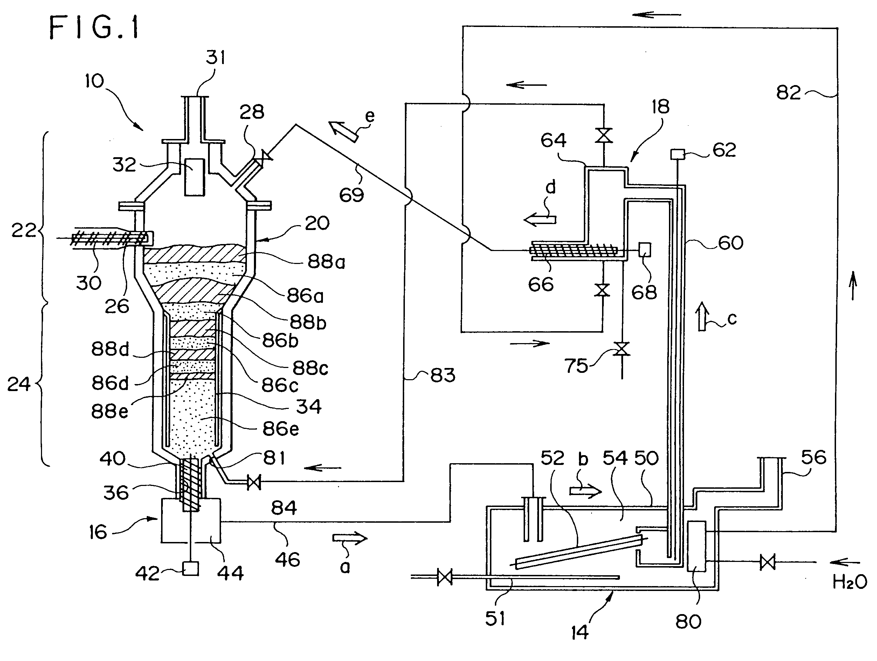

First, an apparatus for decomposing waste plastics to be used in the preferred embodiments of the present invention will be explained. A decomposing apparatus 10 of the first embodiment, as shown by arrows a through e in Fig. 1, has a reactor 20, a regenerating apparatus 14, a separating apparatus 16, and a medium feed apparatus 18. A waste plastics and a heat-reserving heating medium are introduced into the reactor 20, in which the waste plastics is heated for decomposition. The heat-reserving heating medium which serves as a medium for feeding the heat energy for waste plastics decomposition circulates in the reactor 20, the regenerating apparatus 14 and the medium feed apparatus 18.

This heat-reserving heating medium is a granular medium measuring about 2 to 3 mm in average diameter, and is usable in various shapes such as sphere, column, cylinder, triangle pole, square pole, and regular tetrahedron; the use of a shape having a large specific surface area is preferable for the efficient acceleration of decomposition reaction of waste plastics. Also, the use of, for example, silica-alumina which functions as a solid acid catalyst permits decomposition at lower temperatures and with higher decomposition efficiency.

The reactor 20 is made of fire bricks, ceramics, etc., and comprises a mixing section 22 and a reaction section 24. A waste plastic charging port 26 and a medium charging port 28 are disposed in specific positions in the mixing section 22. Waste plastics that has been crushed appropriately is led at the waste plastics charging port 26 into the reactor 20 by means of a screw feeder 30. The heat-reserving heating medium is led at the medium charging port 28 into the reactor 20 by means of the medium feed apparatus 18.

In the ceiling wall of the mixing section 22 is provided a volatile matter discharging port 31. This volatile matter discharging port 31 is fitted with a gas-cooling jacket 32 comprising, for example, a spiral stainless pipe. Regulating the temperature of this jacket can control the molecular-weight distribution of the decomposed gas, that is, the volatile matter, being discharged out, to thereby provide the product property with selectivity.

The reaction section 24 is preferably provided with a partition wall 34 produced of ceramics along the inner peripheral wall surface; the partition wall 34 serves to protect the inner wall of the reactor 22 from abrasion resulting from movement of the heat-reserving heating medium. The partition wall 34 is replaceable after a specific period of use, doing much towards increasing the durability of the apparatus.

At the bottom of the reaction section 24 is provided a medium discharging port 36 for discharging a mixture of the heat-reserving heating medium and undecomposed matter such as nonvolatile matters. Beneath this medium discharging port 36 is installed the separating apparatus 16 for separating the nonvolatile matters from the heat-reserving heating medium.

The separating apparatus 16 comprises a screw-type discharger 40, a driving motor 42, a selector 44, and a transfer means 46. The mixture of the undecomposed matter and the heat-reserving heating medium is sent by the screw-type discharger 40 into the selector 44, where the undecomposed matter is separated from the heat-reserving heating medium. In the selector 44, the undecomposed matter is separated from the heat-reserving heating medium, which is then sent into the regenerating apparatus 14 through the transfer means 46.

The regenerating apparatus 14 has a furnace body 50 wherein a heating gas supplier 51 and a stoker 52 are contained. The heat-reserving heating medium is heated during movement of the stoker 52; at this time, the nonvolatile matter holding on the heat-reserving heating medium is burned for regeneration. A burnt gas produced in a combustion chamber 54 is expelled out of the furnace through a stack 56 after heat recovery and cooling.

In the regenerating apparatus 14, there is provided a heat exchanger 80. Between this heat exchanger 80 and a heating medium cabinet 64 in the medium feed apparatus 18 described later, a pipe 82 is connected. Furthermore a pipe 83 is connected between the heating medium cabinet 64 and the reactor 20.

High-temperature water vapor heated at the heat exchanger 80 is supplied to the heating medium cabinet 64 through the pipe 82, and is further heated, as occasion calls, by the heating gas supplied at the heating gas supply port 75 provided in the heating medium cabinet 64 after use for temperature regulation, then being blown as decomposition energy into the reactor 20 at a high-temperature gas inlet port 81 through the pipe 83. Here, a controller 84 mounted in the pipe 83 controls the flow rate of the water vapor led into the reactor 20.

The medium feed apparatus 18 comprises an elevator 60, an elevator driving motor 62, a heating medium cabinet 64, a screw feeder 66, a screw feeder driving motor 68, and a transfer means 69. The heat-reserving heating medium recovered by the regenerating apparatus 14 is transferred to the heating medium cabinet 64 by the elevator 60, and then transferred into the reactor 20 by the screw feeder 66 through the transfer means 69 after being controlled to a specific temperature.

Next, the method for decomposing waste plastics by the use of the above-described decomposing apparatus 10 will be explained.

First, a specific amount of heat-reserving heating medium, which is heated to a degree of temperature a little higher than a set temperature for reaction, is charged into the medium charging port 28, then a specific amount of crushed waste plastics is charged at the waste plastics charging port 26 onto the heat-reserving heating medium. By repeating the above-described operation, the heat-reserving heating medium and the waste plastics are piled to form a fluidized bed in the reactor 20. The fluidized bed flows downwards successively from the mixing section 22 to the reaction section 24 and further to the medium discharging port 36. During this period, the waste plastics is decomposed. Here in Fig. 1, reference numerals 86a to 86e denote layers of the heat-reserving heating medium; 88a to 88e, layers of waste plastics.

Reaction temperature is set to 400 to 500 °C when thermal decomposition reaction is done by the use of a medium having no catalytic power as a heat-reserving heating medium. Within the temperature range of from 400 to 500°C, waste plastics decomposition to a useful oil content, narrow molecular-weight distribution of decomposed matters, and a decrease in molecular weight are possible. In the meantime, in the case of contact decomposition using a heat-reserving heating medium having catalytic power as described later, the reactor temperature may be within the range of 200 to 400°C; that is, low-temperature reaction for oil recovery is practicable.

When polymer constituting waste plastics contacts the heat-reserving heating medium, polyolefin and polystyrene melt first, flowing down between particles of the heating medium with the lowering of its viscosity. Further decomposition to lower-molecular weight advances between these particles, producing a heavy oily matter from a high-viscosity polymer. The heavy oily matter penetrates and spreads into the heat-reserving heating medium layers 86a to 86e, thus lowering the molecular weight.

When a catalyst is used as the heat-reserving heating medium, the heavy decomposed matter is further decomposed into lower molecules through contact decomposition, vaporizing in the reactor 20. The vaporized product is forced by the vapor pressure to pass upward in Fig. 1 through the heat-reserving heating medium layers 86a to 86e, moving to the volatile matter discharging port 31 on the low pressure side. From this volatile matter discharging port 31 the vaporized product is led to the outside, being cooled down to be recovered as light oil. That is, only the components having the vapor pressure in the reactor 20 are filtered and separated by the heat-reserving heating medium layers 86a to 86e, then move in a form of vapor to the volatile matter discharging port 31, being discharged out of the reactor 20 and recovered.

At this time, when a high-temperature water vapor is blown into the reactor 20 by the controller 84, the water vapor supplies auxiliary energy for decomposition and acts as carrier gas for moving the volatile matter, with the result that the ejection of the volatile matter from between the particles of the heat-reserving heating medium is promoted to lower the vapor pressure, accelerating re-decomposition of high-viscosity, high-temperature heavy matters staying between the particles of the heat-reserving heating medium.

When the heat-reserving heating medium is a catalyst, carbonization of decomposed matters advances on the contact surface in contact with the heat-reserving heating medium, and hydrogen atoms being emitted in the process of this carbonization hydrogenate the olefinic components in the decomposed matter. That is, there takes place a hydrogen transfer reaction of decomposed matters at the time of decomposition reaction. Therefore, the decomposition product produced in the layers of heat-reserving heating medium is further subject to redecomposition and hydrogenation at the same time when passing upwards through the catalytic layers, becoming a stabilized paraffinic gas or oil content.

The capability of predominant promotion of the above-described hydrogen transfer reaction is one of the advantages of the present invention. To efficiently perform this hydrogen transfer reaction, the amount of the heat-reserving heating medium as a catalyst and the amount of waste plastics must be controlled; in this case it is desirable to provide a relatively high catalytic concentration to a reactant. There is produced a carbonaceous substance on the surface of the heat-reserving heating medium with an increase in reaction time. This carbonaceous substance becomes a fuel for regenerating the heating medium.

The heat-reserving heating medium that has decomposed the waste plastics gathers in the bottom section of the reactor 20. The stratum of this heating medium includes nonvolatile matters in the decomposed product. The heating medium inclusive of the nonvolatile matters is taken out at the heat-reserving heating medium discharging port 36 and undergoes a separating treatment by the separator 16 as described above.

According to the present invention, as described above, it is possible to perform efficient separation and recovery of volatile and nonvolatile matters from decomposed products of waste plastics by continuously recovering volatile matters at the volatile matter discharging port 31 of the reactor 20 and nonvolatile matters together with the heat-reserving heating medium at the medium discharging port 36 of the reactor 20 while successively charging the heat-reserving heating medium and waste plastics from above into the reactor 20.

Furthermore, according to the present invention, the retention time of a reactant in the reaction system can be properly controlled by regulating the amount of waste plastics and heat-reserving heating medium to be supplied and discharged; and therefore particularly in the case of contact decomposition which uses the heat-reserving heating medium having catalytic power, it is possible to easily control the composition of a reaction product. For example, when the contact time is relatively prolonged, the recovery amount of multiple-branch paraffinic components can be increased. These components cannot be produced by use of a conventional waste plastics decomposing apparatus, and has not only superior combustibility but varieties of advantages that a new application as a high boiling point solvent can be expected.

Generally, of waste plastics those which produce volatile components when decomposed at low temperatures (400 °C or lower) are polyolefin or polystyrene plastics. PVC and PET are difficult to produce vapor pressure components and are likely to produce much of solid residue. And according to the conventional method for decomposing waste plastics which uses a high-temperature gas as a heating medium for the fluidized bed, decomposed gas to be recovered is of low combustion calorie; and in the external heating system there occurs a large energy loss and the decomposed product has a low additional value, which are not practical.

In the meantime, according to the present invention, the method of supplying the energy for thermal decomposition is rational and undecomposed matters can easily be separated into decomposed gas and an undecomposed matter within the reactor 20, so that the decomposition of mixed plastics will become practicable. The reactor 20 of the present invention has striking differences in many respects from conventional reactors particularly because recovered gas and oily matters, unlike those mainly containing conventional olefinic substance, have chemical stability because of the presence of much paraffinic substances, and further the capability of low-temperature reaction.

Therefore, waste plastics to be charged into the reactor 20 may be of any composition; particularly there will be no problem if PVC waste plastics alone is charged. That is, in the apparatus according to the present invention, waste plastics of PVC which is regarded the most difficult to decompose can easily be decomposed for recovery of useful components. For example, when only PVC is used, a small amount of oily matter and a large amount of HCI gas are generated but a larger part of the PVC is recovered as a solid carbonaceous matter together with the heat-reserving heating medium at the medium discharging port 36. A carbonaceous residue has wide applications because of its usability as useful activated carbon which is obtainable through activation with water vapor. Especially, in the case of recovery as the activated carbon, the fluidized bed is stopped to be used as a stationary bed for the purpose of accelerating the dehydrochlorination reaction of PVC, bringing the carbon products into contact with a high-temperature water vapor (600 to 700°C or higher) to thereby enable the recovery of activated carbon.

Furthermore, according to the present invention, the reactor is comparatively simple in construction, being constituted of an adiabatic material such as firebricks or refractory ceramics, which are hardly corroded with acid of PVC, etc. It is, therefore, possible to prolong the lifetime of the apparatus. Furthermore, since a carbon film by coaxing is hard to form on the inside wall surface of the reactor, no special technology and material are required to prevent the formation of the carbon film which is seen in conventional reactors.

One example of the yield of each fraction in a decomposed product obtained by the above-described embodiment is given below.

| Temperature(°C) | 220 | 260 | 280 | 300 | 350 |
|---|---|---|---|---|---|
| Proportion of each fraction(wt%) | | | | | |
| Gas | 3 | 4 | 5 | 7 | 11 |
| Gasoline, kerosene | 20 | 35 | 40 | 64 | 75 |
| Heavy oil | 37 | 36 | 35 | 11 | 4 |
| Wax, grease | 40 | 25 | 20 | 18 | 9 |
| Carbide | 0 | 0 | 0 | 0 | 1 |

As seen from the above table, high additional-value components of gasoline and kerosene fractions, etc. were recovered in large quantities at relatively low temperatures.

Here, in the first embodiment described above, the regenerating apparatus 14 is used in regeneration of the heat-reserving heating medium; it is, however, to be noticed that another method not using the regenerating apparatus 14 is adoptable. That is, it is possible to regenerate the heat-reserving heating medium by directly moving the heating medium into the heating medium cabinet 64 by means of the transfer means 46 without using the regenerating apparatus 14 and by using heating gas introduced into the heating medium cabinet. In this case, the heating medium cabinet 64 corresponds to the regenerating apparatus 14. It may be selected arbitrarily which should be used, in accordance with the composition of waste plastics to be decomposed.

Furthermore, in the first embodiment described above, the volatile matter discharging port 31 is provided in the ceiling wall of the reactor 20; however, with an increase in the charge of waste plastics to be processed, the fluidized bed in the reactor 20 becomes thick until the volatile matter produced at the bottom side of the fluidized bed gathers at the volatile matter discharging port 31 provided in the ceiling wall. In case of a great pressure loss at the fluidized bed, therefore, the provision of a volatile matter discharging port in both the side and the bottom of the reactor 20 is required as occasion calls.

Furthermore, in the first embodiment described above, the waste plastics and the heat-reserving heating medium are piled alternately for reaction; in other case, when waste plastics which easily becomes massive at the time of melting like, for example, polystyrene and polyolefin, it is desirable that the waste plastics and the heat-reserving heating medium charged into the reactor 10 be agitated and mixed by an appropriate agitating means in the mixing section 22 for the purpose of promoting the dispersion of the waste plastics into the heat-reserving heating medium. Also as is easily understood from the explanation of the above-described embodiments, for example, the waste plastics supply port is provided in the upper part of the reactor; the heating medium discharging port, in the upper part of the reactor; and a decomposed gas medium discharging port, in the upper part or side surface of the reactor; and then while the heating medium is being moved from the lower part towards the upper part by means of a screw blade, decomposition reaction can be performed continuously. These may be arbitrarily determined according to the composition and amount of the waste plastics to be processed.

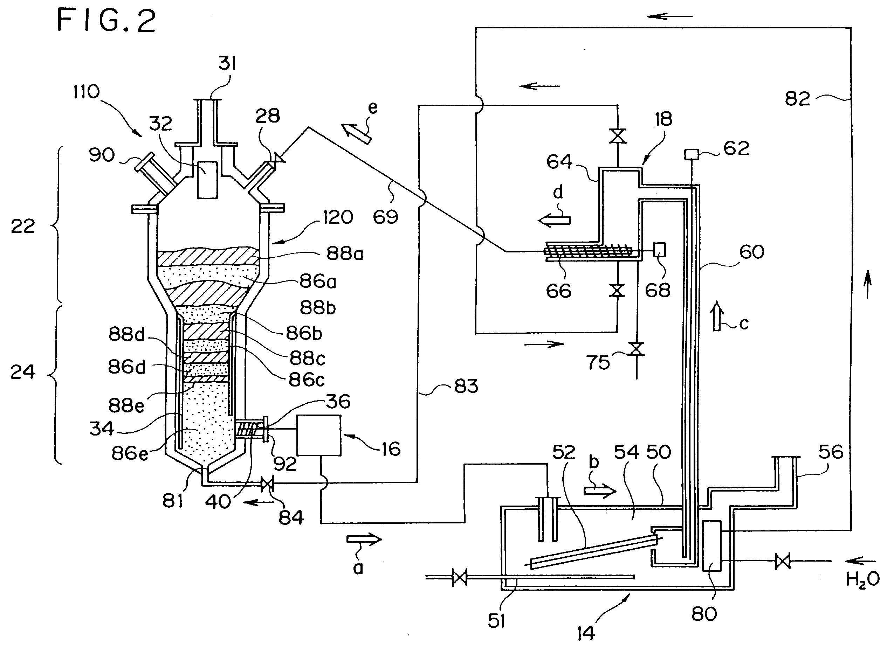

Fig. 2 shows a decomposing apparatus 110 in a second embodiment; a reactor 120 thereof has a waste plastics charging port 90 in the ceiling wall and a heating medium discharging port 92 in the side wall.

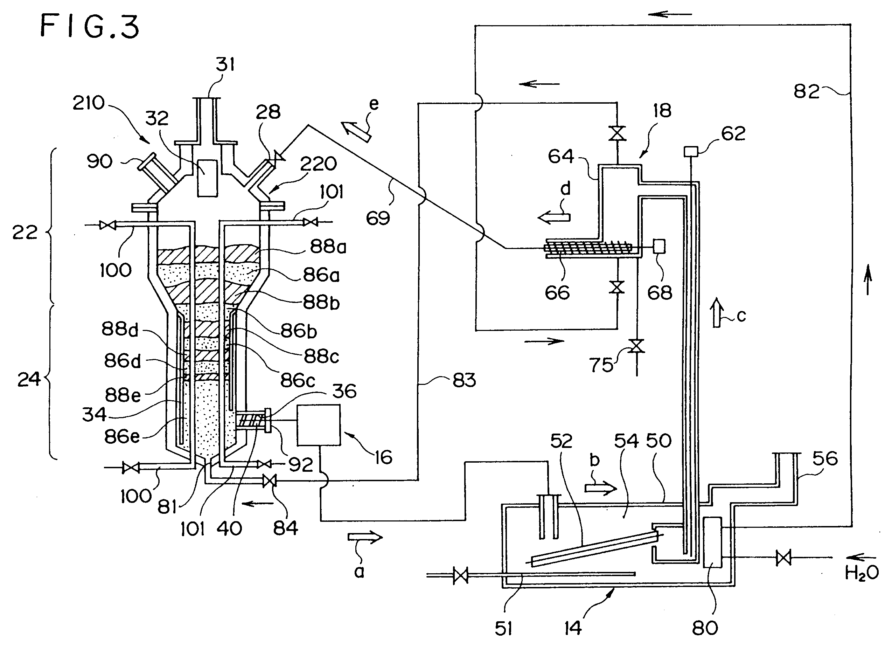

Fig. 3 shows a decomposing apparatus 210 in a third embodiment; a reactor 220 thereof has fluid pipes 100 and 102 as a built-in heating source inside. Fluid is fed at an appropriate temperature into these pipes to supplementarily supply energy for decomposition, so that the temperature distribution in the reactor 220 can be properly controlled.

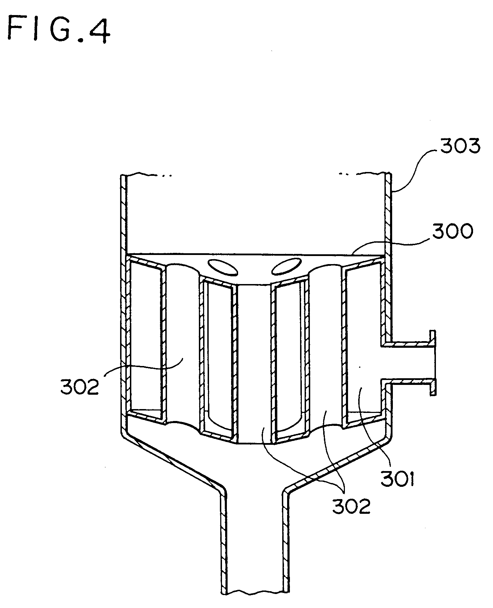

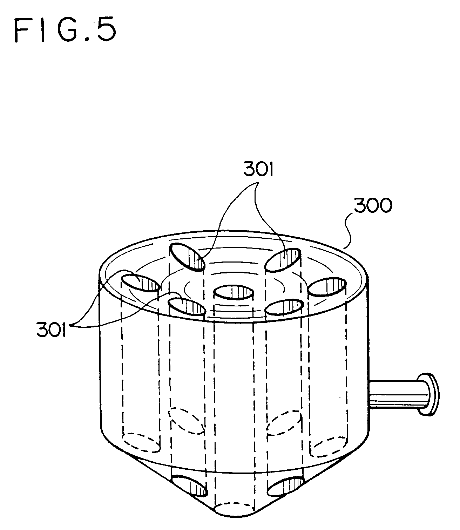

Figs. 4 and 5 show a built-in heating source 300 of another example, which has a heating chamber 301 hermetically formed and also has a plurality of passages 302 provided through the heating chamber 301. The heating source 300 is set inside the reactor 303, closing the reaction section of the reactor 303. To the heating chamber 301 of the built-in heating source 300 a high-temperature gas of appropriately set temperature is supplied from outside; the heat energy of this high-temperature gas is supplied through the wall of the passages 302 to the fluidized bed flowing downwards in the passages 302. Therefore, it is possible to control the temperature distribution in the fluidized bed by appropriately setting the location of the passages 302 and the heat energy supply rate via the wall of the passages 302.

### [INDUSTRIAL UTILIZATION]

As has been explained above, according to the present invention, the decomposition energy for decomposing waste plastics in contact with the heat-reserving heating medium which forms the fluidized bed allows the reactor interior to be kept at an appropriate temperature distribution, thereby realizing the production of a quality decomposition product of high additional value. Furthermore, because the heat-reserving heating medium functions as a filtering medium, it is possible to easily separate and recover volatile and nonvolatile matters produced at the time of decomposition. Furthermore, decomposition can be done efficiently at low temperatures by giving a catalytic function to the heat-reserving heating medium. Consequently, according to the present invention, it is not only possible to produce a low-temperature oily substance (400 °C or lower) of mixed waste plastics including PVC which has been very difficult to obtain but effective for processing the PVC itself. Particularly a difference from conventional ones lies in that a decomposition product of paraffinic system components which are chemically stable with superior storability and combustibility can be selectively recovered. Furthermore, since the heat-reserving heating medium is heated to burn for regeneration outside of the reactor and circulated for reutilization, the decomposition reaction energy can be easily supplied to allow continuous reaction, thus ensuring efficient decomposition of a large amount of waste plastics.

## Claims

1. A method of decomposing waste plastics for recovering useful components through thermal decomposition of the waste plastics, said method comprising the steps of: using a fluidized-bed type reactor provided with a waste plastics charging port, a medium charging port, a volatile matter discharging port, and a medium discharging port, to form a fluidized bed with a mixture of the waste plastics charged at said waste plastics charging port and a granular heat-reserving heating medium preheated and charged at said medium charging port; decomposing the waste plastics with heat energy for decomposition supplied from the heat-reserving heating medium while moving said fluidized bed in a specific direction within said reactor; leading to recover a volatile matter produced by said composition, out of said reactor at said volatile matter discharging port after passing said volatile matter through in said fluidized bed; and separating to recover a nonvolatile matter from the heat-reserving heating medium after taking out said nonvolatile matter together with the heat-reserving heating medium at said medium discharging port.

2. A method for decomposing waste plastics according to claim 1, wherein the heat-reserving heating medium measuring 2 to 3 mm in average grain size is used.

3. A method for decomposing waste plastics according to claim 1 or 2, wherein the heat-reserving heating medium having catalytic power is used for decomposing the waste plastics.

4. A method for decomposing waste plastics according to claim 1 or 2, wherein a silica-alumina granular substance is employed as the heat-reserving heating medium.

5. A method for decomposing waste plastics according to any one of claims 1 to 4, wherein high-temperature gas is supplied into said reactor from outside to supplementarily supply heat energy to said fluidized bed.

6. A method for decomposing waste plastics according to any one of claims 1 to 5, wherein a built-in heat source is provided within said reactor, for supplementarily supplying heat energy to said fluidized bed.

7. A method for decomposing waste plastics according to claim 5 or 6, wherein the supply of auxiliary heat energy is controlled according to temperature distribution within said reactor.

8. An apparatus for decomposing waste plastics for recovering useful components through thermal decomposition of said waste plastics, said apparatus, comprising: a reactor which has a waste plastics charging port, a medium charging port, a volatile matter discharging port, and a medium discharging port, forms a fluidized bed with a mixture of the waste plastics charged at said waste plastics charging port and a granular heat-reserving heating medium charged at said medium charging port, decomposes the waste plastics with heat energy for decomposition supplied from said heat-reserving heating medium while moving said fluidized bed in a specific direction within said reactor, leads a volatile matter produced by decomposition outside at said volatile matter discharging port after passing said volatile matter through in said fluidized bed, and takes out a nonvolatile matter, together with said heat-reserving heating medium, at said medium discharging port; a separating apparatus for separating the nonvolatile matter from the heat-reserving heating medium inclusive of the nonvolatile matter taken out at said medium discharging port of said reactor; a regenerating apparatus for regenerating the heat-reserving heating medium after separation of the nonvolatile matter by said separating apparatus; and a medium feed apparatus for supplying, at a specific temperature, the heat-reserving heating medium regenerated by said regenerating apparatus into said reactor.
